# EUROPÄISCHE PATENTSCHRIFT

(11) **EP 1 894 905 B1**
(45) Veröffentlichungstag und Bekanntmachung des Hinweises auf die Patenterteilung: **22.07.2009**
(21) Anmeldenummer: 06119937.8
(22) Anmeldetag: 31.08.2006
(51) Int. Cl.: C04B 24/26, C04B 28/02

(54) **Betonzusammensetzung**
Concrete composition
Composition de béton

(43) Veröffentlichungstag der Anmeldung: 05.03.2008
(73) Patentinhaber: Spindler, Neil, 38789 Puntagorda, Islas Canarias (ES)
(72) Erfinder: Reul, Horst, Dr., 89257 Illertissen (DE)
(74) Vertreter: von Kreisler Selting Werner

(56) Entgegenhaltungen:
- EP-A1- 0 605 318
- US-A1- 2003 127 026

## Beschreibung

Gegenstand der vorliegenden Erfindung ist eine Fertigbetonmischung enthaltend Zement mit einem überdurchschnittlichen hohen Anteil an Brownmillerit sowie Albit und Gismodin und ein Betonzusatzmittel zur Erzeugung einer langanhaltenden Fliessfähigkeit von Betonmischungen.

Moderne Betone mit erhöhter Dauerhaftigkeit (Negativbeispiel: deutsche Autobahnbrücken aus den 60-er Jahren) zeichnen sich durch eine hohe Gefügedichte aus; diese verhindert und/oder verzögert das Eindringen von schädlichen Substanzen, welche den Beton und/oder die Armierungseisen langfristig angreifen, vor allem Wasser, CO₂, Salze. Es ist daher notwendig, möglichst wenig Anmachwasser bei der Herstellung von Beton zu verwenden, da überschüssiges Wasser beim späteren Verdunsten Kapillarporen hinterlässt, welche wiederum die Gefügedichte herabsetzen. In der Europäischen Betonnorm EN-206 werden für bestimmte Expositionsklassen (=Einsatzgebiete des Betons) Obergrenzen für den so genannten Wasser-Zementwert gesetzt. Der Wasser-Zementwert definiert das Verhältnis zwischen Wassergewicht und verwendetem Zementgewicht, beispielsweise pro m³ Beton.

Wird Beton also mit sehr wenig Wasser angemacht (aber natürlich immer genug, um eine vollständige Hydratation des Zements zu gewährleisten), wird die Qualität mithin sehr gut, aber der Beton lässt sich nicht mehr gut verarbeiten (und schon gar nicht pumpen), da er zu steif ist. Ein gut pumpbarer Beton (das sind mindestens 70% aller Fälle) sollte eine Konsistenz "weich" haben. Die Konsistenz eines Betons wird ca. 5 Minuten nach dem Anmischen mittels verschiedener Verfahren bestimmt; ein allgemein anerkanntes und verwandtes Verfahren ist der so genannte "Abrams-Konus". Hierbei wird ein genormter Metallkonus mit dem frischen Beton gefüllt, sodann der Konus hochgezogen, wobei der verbleibende Betonkonus in sich zusammensackt und hernach in Zentimetern gemessen, um wie viel der Betonkonus an Höhe verloren hat. Die oben erwähnte Konsistenz "weich" ist bei einem Absacken von 6 bis 9 cm gegeben.

Um diese gegensätzlichen Forderungen unter einen Hut zu bringen, sind so genannte Betonverflüssiger und/oder Fliessmittel (bereits in den 1950-er Jahren) als Betonzusatzmittel entwickelt worden. Der Unterschied ist einfach, da Fliessmittel wesentlich effektiver als Betonverflüssiger sind. Mit Fliessmitteln kann man beispielsweise Betone herstellen, die so flüssig sind, dass sie sich selbst nivellieren (wie Bodenausgleichsmasse); dies entspricht dann einem Konus von etwa 24 bis 28 cm.

Ein weiterer Aspekt ist, wie lange das zugesetzte Fliessmittel im Beton wirksam bleibt. Während die "alten" Betonverflüssiger nur ca. 30 bis 40 Minuten Wirkung entfalten, sind moderne Hochleistungs-Fliessmittel bis zu 2 Stunden wirksam. Dieser Punkt ist extrem wichtig für die Transportbetonhersteller, da die Mischerfahrzeuge in der Regel eine Stunde oder länger vom Zeitpunkt der Anmischung des Betons bis zum Abschluss des Abladevorgangs am Lieferort benötigen. Deshalb wurden die bekannten, einfachen Betonverflüssiger auch immer erst bei Ankunft auf der Baustelle vom LKW-Fahrer in die Mischtrommel aus einem kleinen Zusatztank dosiert. Moderne Fliessmittel können dagegen direkt im Betonwerk beim Mischvorgang zugegeben werden, wodurch der Schwachpunkt LKW-Fahrer ausgeschaltet wird und die Dosierung wesentlich genauer erfolgen kann.

Bekanntermaßen gibt es eine Vielzahl von Zementsorten, da man Zement aus vielerlei Grundprodukten herstellen kann. Der Ur-Zement wurde seit Mitte des 19. Jahrhunderts aus einem bestimmten Kalkstein gebrannt, welcher aus der Umgebung der englischen Halbinsel Portland stammte. Der Name für diesen "reinen" Zement hat sich bis heute erhalten: Portland-Zement, auch wenn chemisch sehr ähnliches Gestein auch anderswo auf der Welt abgebaut und zu Zementklinkern gebrannt wird. Da Portland-Klinker nun einmal vergleichsweise sehr teuer ist, wird gerne von Seiten der Zementindustrie mit Beimischungen gearbeitet oder gleich ein ganz anderer Grundstoff eingesetzt, beispielsweise Hochofenschlacke, andere Kalke, Stäube oder das bereits den Römern bekannte Vulkangestein aus der Gegend um Pozzuoli. Letztere "puzzolanische" Aschen sind oft am preisgünstigsten, da in vielen Teilen der Welt vor Ort vorhanden, so also nicht nur auf den Kanarischen Inseln, sondern auch beispielsweise in der Eifel, in der Karibik und Teilen von Südamerika.

Es ist offensichtlich, dass die chemische Zusammensetzung dieser verschiedenen Zemente völlig unterschiedlich ist, und dass daher ein bestimmtes Fliessmittel bei einer Zementsorte hervorragend wirkt und bei anderen nur in geringem Umfang. Daher bieten alle Hersteller von Betonzusatzmitteln (das ist der Sammelbegriff für alle möglichen Zusatzmittel, einschließlich Fliessmittel, aber auch Erhärtungsverzögerer, Erhärtungsbeschleuniger, Luftporenbildner etc.) eine Vielzahl von Fliessmitteln an.

Interessanter- und verständlicherweise sind die angebotenen Zusatzmittel auf die gängigsten Zementsorten zugeschnitten. Wer als Betonhersteller von seinem Zementlieferanten einen chemisch sehr eigenartigen (obwohl in die Zementnorm passenden) Zement geliefert bekommt, hat also das Problem, dass er unter Umständen kein Fliessmittel findet, das zu seinem Zement "passt".

Um insbesondere Zemente mit hohem puzzolanischem Anteil oder beispielsweise sonstigem hohem Eisenanteil (z.B. CEM II/A-P, CEM II/B-P bzw. CEM IV oder Zemente aus oder mit Hochofenschlacken) mit den besonderen chemischen Eigenschaften (erhöhter Anteil an Brownmillerit und/oder Albit und/oder Gismondin bzw. anderer Feldspate) ordnungsgemäß verflüssigen zu können, besteht ein Bedarf an Betonverflüssigern und/oder Fliessmitteln, das die durch die vorgenannten Substanzen hervorgerufenen für die Verarbeitung negativen Wirkungen im frisch angemischten Beton gar nicht erst entstehen lässt oder zumindest behindert/verzögert. Die für die Verarbeitung negativen Wirkungen sind: die rasche Bildung von großen Kristallen, welche die Rheologie (mangelhafte Verflüssigung) und den Wasseranspruch des Frischbetons negativ beeinflussen, die kurze Verarbeitungszeit des Betons und die mangelhafte Druckfestigkeit nach 28 Tagen bei einer definierten Zementzugabe (im Vergleich zu anderen Zementen bei gleicher Betonrezeptur).

Tatsächlich handelt es sich um das Problem, wie beispielsweise der hohe Eisengehalt im Zement komplexiert werden kann mit der Folge, dass das Eisen in der Schwebe gehalten wird und nicht vorzeitig (möglichst also 90 bis 120 Minuten nach Wasserzugabe) in Lösung geht.

Bekannte Fliessmittel sind nicht für den Einsatzbereich mit den vorgenannten Zementen bestimmter Herkunftsgebiete, z.B. den Kanarischen Inseln, optimiert und verhindern daher nicht die rasche Bildung großer Kristalle mit den beschriebenen negativen Sekundärwirkungen.

EP 0 605 318 A1 beschreibt eine Zusammensetzung, geeignet die rheologischen Eigenschaften von Produkten auf Zementbasis zu verbessern und insbesondere die Verarbeitbarkeitsdauer gebrauchsfertiger Betone zu erhöhen, dadurch gekennzeichnet, dass sie in Form eines ternären Gemisches umfasst, ein superplastifizierendes oder Wasser-reduzierendes Mittel mit dispergierender Wirkung, ein Stabilisierungsmittel, welches fähig ist mit den Calziumionen des Produkts auf Zementbasis ein Chelat zu bilden und ein polymeres Polycarboxyl-Dispergiermittel.

US 2003/0127026 A1 beschreibt eine zementartige Zusammensetzung mit hoher Anfangsfestigkeit umfassend einen hydraulischen Zement und eine Beimengung, wobei die Beimengung ein Polycaboxylat-Dispergiermittel, einen Beschleuniger und einen Verzögerer enthält.

Gegenstand der vorliegenden Erfindung ist in einer ersten Ausführungsform eine Fertigbetonmischung enthaltend Zement mit einem überdurchschnittlichen hohen Anteil an Brownmillerit sowie Albit und Gismodin und ein Betonzusatzmittel zur Erzeugung einer langanhaltenden Fliessfähigkeit von Betonmischungen enthaltend (a) wenigstens Gluconsäure und/oder ein in Wasser lösliches oder dispergierbares Alkalimetall- und/oder Erdalkalimetallsalz der Gluconsäure (Gluconat), (b) wenigstens Polycarbonsäure, ausgewählt aus Polyacrylsäuren, Polymethacrylsäuren, Polymaleinsäure-Derivaten, Alginsäure oder Pektinsäure und/oder ein in Wasser lösliches oder dispergierbares Alkalimetall- und/oder Erdalkalimetallsalz der Polycarbonsäure, (c) wenigstens ein wasserlösliches oder dispergierbares Alkalimetall- und/oder Erdalkalimetallsalz eines Polycarboxylatethers und (d) Wasser.

Mit Hilfe der erfindungsgemäßen Betonzusatzmittel ist es möglich, Betone in der gewünschten Konsistenz herzustellen, insbesondere zu transportieren und zu verarbeiten, die anderenfalls zu schnell ansteifen und/oder eine erhöhte Wassermenge benötigen und/oder nicht ihre geplante Endfestigkeit erreichen. Die erfindungsgemäßen Betonzusatzmittel entfalten ihre Wirkung nicht nur bei einem bestimmten, sondern bei einer großen Zahl von verschiedenen Zementsorten.

Auf den Kanarischen Inseln geschieht beispielsweise folgendes: Beide Zementhersteller (echtes Duopol) bieten zwar einen genormten Zement mit der Bezeichnung "CEM II/A-P 42,5 R" an, aber dieser Zement hat einige unangenehme Eigenschaften, die beispielsweise der gleiche Zementtyp, in Deutschland hergestellt, nicht hat. Es handelt sich konkret um einen überdurchschnittlich hohen Anteil an Brownmillerit [Ca-Al-Ferrit oder Ca₂(Al,Fe)₂O₅] - in der Betontechnologie wird diese Zementphase mit C4AF bezeichnet - sowie Albit [Na-Al-Silikat oder NaAlSi₃O₈] sowie Gismondin [Ca-Al-Silikat-Hydrat oder CaAl₂Si₂O₈ x 4H₂O]. Albit und Gismondin sind Feldspate.

Diese vorgenannten Zementbestandteile reagieren (nach Zugabe des Anmachwassers) sehr schnell und groß wachsende Kristalle und bewirken dadurch, dass der Beton (genauer gesagt: der Zementleim im Beton) sehr schnell ansteift und gleichzeitig viel Anmachwasser benötigt; wir reden beim Ansteifen von Zeiträumen von 3 bis 10 Minuten, also auf jeden Fall viel zu schnell, um den Beton mit der gewünschten bzw. geplanten Konsistenz transportieren und verarbeiten zu können.

Der übliche Gehalt von C4AF in einem Zement liegt bei 1 bis 3%; bei den kanarischen Zementen liegt er bei 5 bis 10%; das gleiche Problem kann bei Zementen aus Hochofenschlacken auftreten. Auf den Kanaren wird dieser hohe Eisengehalt durch die verwendete puzzolanische Vulkanasche in den Zement importiert.

Darüber hinaus wird angenommen, dass die vorgenannten großen, plattenförmigen Kristalle zu einem späteren Zeitpunkt (nach ca. 90 Minuten, gerechnet ab dem Anmischen des Betons) die Entwicklung und/oder Verzahnung der eigentlich die Betonstruktur ausmachenden nadelförmigen Kristalle (international übliche Kurzbezeichnung:
C2S, C3S) behindern; genau diese 2 Kristallarten entwickeln sich aber erst ab ca. 90 Minuten nach dem Anmischen des Betons; daher darf Beton beispielsweise auch nicht später als 90 Minuten eingebaut werden, es sei denn, er wäre mit Erstarrungsverzögerern versetzt. Die Konsequenz aus alldem ist ein Beton, welcher weniger druckfest ist, als er eigentlich sein könnte.

Genau die Summe aus dem Vorgesagten geschieht auf den Kanarischen Inseln: der Beton benötigt sehr viel Wasser beim Anmischen, bleibt trotzdem nur (zu) kurze Zeit verarbeitungsfähig und erreicht nicht die aufgrund der zugefügten Zementmenge geplante Endfestigkeit - und dies, bei Zusätzen von traditionellen Betonverflüssigern und/oder Fliessmitteln, auch solchen der so genannten letzten Generation (PCE).

Mit anderen Worten: die bis dato bekannten bzw. gebräuchlichen Fliessmittel können die auf den Kanarischen Inseln (und womöglich anderswo) gebräuchlichen Zemente nicht ordnungsgemäß verflüssigen. Dies liegt offensichtlich daran, dass den Zusatzmittelherstellern die oben genannten chemischen Eigenheiten des kanarischen Zements und die daraus resultierenden Effekte nicht bekannt sind.

Das erfindungsgemäße Fliessmittel ist für genau diesen Einsatzzweck optimiert. Es enthält Inhaltsstoffe welche die Eisenverbindungen im Zement komplexieren.

Darüber hinaus ist es aus wenigstens drei, insbesondere vier chemischen Grundsubstanzen zusammengesetzt, während bisherige Fliessmittel üblicherweise höchstens bis zu zwei Grundsubstanzen enthalten.

Bei den erfindungsgemäßen Betonzusatzmitteln handelt es sich um eine Produktfamilie, da verschiedene Zemente (selbst beispielsweise die ziemlich genau definierte Zementsorte CEM II/A-P) von Produzent zu Produzent und von Land zu Land unterschiedliche chemische Eigenschaften haben. Theoretisch müsste man daher für jeden Zement in jedem Land ein auf ihn optimiertes Fliessmittel herstellen, wobei die chemischen Grundsubstanzen (wie folgt) immer die gleichen sein werden, nicht jedoch ihr Abmischungsverhältnis.

Obwohl prinzipiell im Sinne der vorliegenden Erfindung Gluconsäure allein eingesetzt werden kann, ist es im Sinne der vorliegenden Erfindung besonders bevorzugt, Gemische aus Gluconsäure und Natriumgluconat einzusetzen. Entsprechende wässrige Lösungen sind jeweils im Handel erhältlich. Als besonders bevorzugt hat sich ein Gemisch aus Gluconsäure und Natriumgluconat herausgestellt, bei dem das Gewichtsverhältnis von Gluconsäure zu Alkalimetallgluconat im Bereich von 2 zu 1 bis 1 zu 2 Gewichtsteilen eingestellt ist.

Die Bezeichnung Carbonsäure steht im Allgemeinen als Sammelbezeichnung für niedrig molekulare aliphatische und aromatische Carbonsäuren mit in der Regel mehr als 2 Carboxylgruppen im Molekül. Darüber hinaus steht die Bezeichnung Polycarbonsäuren als Bezeichnung für organische Polymere mit einer Vielzahl von Carboxygruppen in den einzelnen Makromolekülen, die durch Homopolymerisation oder Copolymerisation ungesättigter ein- und mehrbasiger Carbonsäuren hergestellt werden. Wichtige Vertreter dieser auch als Polyelektrolyte oder Polysäuren bezeichneten Polycarbonsäuren sind unter anderem Polyacrylsäuren, Polymethacrylsäuren, Polymaleinsäuren-Derivate als synthetische, und Alginsäure oder Pektinsäure als natürliche Polymere.

Polyacrylsäuren sind bekanntermaßen wasserlöslich, insbesondere in Form ihrer Salze. Sie werden in der Säure- oder Salzform (Natrium-, Ammonium-Salze) angeboten. Technische Produkte haben üblicherweise Molmassen im Bereich von 2.000 bis 300.000 g/Mol.

In Wasser unlösliche, aber stark quellende und damit dispergierbare Polyacrylsäuren können durch vernetzende Copolymerisation von Acrylsäuren mit bi- und polyfunktionellen Monomeren, beispielsweise mit Polyallylglycosen, bzw. durch partielle Vernetzung mit mehrwertigen Ionen, beispielsweise Aluminiumionen synthetisiert werden. Polyacrylsäuren gehören als Polysäuren zu den Polycarbonsäuren. Die Polyacrylsäuren sind üblicherweise hygroskopisch feste Produkte mit Glasübergangstemperaturen von 105 bis 130 °C und zersetzen sich oberhalb 200 bis 250 °C unter Wasserabspaltung und Zersetzung. Polyacrylsäuren werden als Festkörper, wässrige Lösungen oder Emulsionen angeboten. Im Sinne der vorliegenden Erfindung umfassen die Säuren auch deren wasserlösliche oder in Wasser dispergierbaren Alkalimetall- und/oder Erdalkalimetallsalze.

Ferner sind Polycarboxylatether Bestandteil des erfindungsgemäßen Betonzusatzmittels, wobei das Gewichtsverhältnis der Polycarbonsäuren, Polyacrylsäuren, zu den Polycarboxylatethern bevorzugt im-Verhältnis 3 zu 1 bis 1 zu 1 einzustellen ist.

Weiterhin enthalten die erfindungsgemäßen Betonzusatzmittel gegebenenfalls wenigstens ein Alkalimetall- und/oder Erdalkalimetallsalz der Ligninsulfonsäure einschließlich der freien Säure. Ligninsulfonsäure ist bekanntermaßen das beim Sulfitaufschluss von Holz zur Gewinnung von Cellulose anfallende Reaktionsprodukt aus nativem Lignin und schwefliger Säure. In Abhängigkeit in den vom Aufschlussverfahren verwendeten Basen resultieren wasserlösliche Natrium-, Ammonium-, Calcium- oder Magnesiumsalze der Ligninsulfonsäure. Angaben zur molekularen Masse der Ligninsulfonsäure variieren mit Werten von 10.000 bis 200.000. Die Anzahl der SulfonsäureGruppen beträgt etwa 2 pro 5 bis 2 pro 8 Phenylpropaneinheiten. Ligninsulfonsäure und ihre Salze, die Ligninsulfonate, sind Bestandteil der Sulfitablaugung aus denen sie als braunes Pulver isoliert werden.

Besonders bevorzugt im Sinne der vorliegenden Erfindung sind Betonzusatzmittel, die 17,5 bis 35, insbesondere 20 bis 30 Gew.-% Gluconsäure/Gluconat, 5 bis 30, insbesondere 5 bis 10 Gew.-% Polycarbonsäure/Polycarbonsäuresalz, 5 bis 30 Gew.-%, insbesondere 5 bis 20 Gew.-% Polycarboxylatether/Polycarboxylatethersalz und gegebenenfalls 0 bis 30, insbesondere 10 bis 20 Gew.-% Ligninsulfonsäure/ Ligninsulfonsäuresalz, auf 100 Gew.-% aufgefüllt mit Wasser, enthalten. Bei anderen Mischungsverhältnissen ist die Wirksamkeit des Fliessmittels nicht garantiert; außerdem kann es zu Entmischungserscheinungen des Fliessmittels kommen.

Aufgrund des sauren Charakters der drei oder vier genannten Bestandteile der erfindungsgemäßen Betonzusatzmittel liegen die pH-Werte im sauren Bereich. Zur Anwendung im stark alkalischen Beton ist es daher in der Regel erforderlich, die Betonzusatzmittel auf einen schwach sauren pH-Wert, insbesondere im Bereich von 3,5 bis 6,5 einzustellen. Dies kann beispielsweise mit verdünnter Kalilauge oder Natronlauge geschehen.

Es wurde gefunden, dass Betonmischungen unter Einsatz der o.g. Betonzusatzmittel sehr stark und dauerhaft (mindestens 90 Minuten ab Anmischungsvorgang des Betons) verflüssigt werden. Je nach Dosierung des Fliessmittels werden "Abrams-Koni" von ca. 9 bis zu 24 erreicht. Diese Wirkungen werden erzielt, wenn man die erfindungsgemäßen Betonzusatzmittel in einer Menge von 0,2 bis 1,2 Gew.-%, insbesondere 0,6 bis 0,8 Gew.-%, bezogen auf den Zementgehalt im Beton einsetzt. Eine zu geringe Dosierung führt wie bei allen Betonzusatzmitteln nicht zur gewünschten Wirksamkeit des Fliessmittels. Eine erheblich zu hohe Dosierung kann zur Folge haben, dass der Beton viel länger als üblich benötigt, um den Abbindevorgang zu beenden, beispielsweise 22 Stunden oder mehr, insbesondere bei tiefen Außentemperaturen. Diese anfängliche Verzögerung hat jedoch keinen oder kaum negativen Einfluss auf das spätere Erhärtungsverhalten des Betons. Es wurde anhand zahlreicher Druckproben festgestellt, dass - bei einer Überdosierung von 1,5 Gew.-% des Fliessmittels und gleichzeitig tiefen Außentemperaturen um die 8 °C - höchstens die Druckfestigkeiten der Probewürfel nach 3 Tagen etwas geringer waren. Die Druckfestigkeiten der Probewürfel nach 7, 14 und insbesondere 28 Tagen waren wieder im normalen - vorhergeplanten - Bereich.

### Ausführungsbeispiele:

### Beispiel 1:

23 Gew.-Teile einer 45 Gew.-%igen wässrigen Lösung von Natriumgluconat mit dem Handelsnamen EMF 1240 der Fa. Jungbunzlauer, Basel, Schweiz, 23 Gew.-Teile einer 50 Gew.-%igen wässrigen Lösung Gluconsäurelösung 10 Gew.-Teile Polyacrylat mit dem Handelsnamen Clercal® SL 17, 35 Gew.-Teile eines in Wasser gelösten Polycarboxylatether mit der Handelsbezeichnung Remicrete® SP 10 und 5,5 Gew.-Teile Wasser werden gemischt. Bei einem pH-Wert (eingestellt durch Einsatz von KOH durch teilweisen Ersatz des Wassers) von etwa 8,5 bis 9,0 wurde mit einem Zement der Sorte CEM II/A-P 42,5 R der Hersteller CEMEX und Cement Investment das Betonzusatzmittel zugegeben.

Die oben genannte Mischung wurde mit 50 Gew.-%-iger Kalilauge auf den oben genannten pH-Wert eingestellt. Es ergab sich eine Dichte von ca. 1,20 g/cm³.

In der nachfolgenden Tabelle sind die Daten von verschiedenen Versuchen wiedergegeben: in den ersten drei Spalten sind angegeben:
die Menge an Zement,
das Verhältnis von Wasser zu Zement (W/Z), d.h. der Wasser-Zement-Wert, und
die Menge des eingesetzten Betonzusatzmittels.

Der Abrams-Konus gibt die Konsistenz des Betons an. In den letzten drei Spalten wird die Druckfestigkeit eines Standard-Probewürfels nach 3, 7 und 28 Tagen wiedergegeben.

**Ergebnis**

| **CEM** | **Verhältnis w/z** | **Zusatz Fliessmittel** | **Abrams-Konus** | **Resultat** **3 Tage** | **Resultat** **7 Tage** | **Resultat** **28 Tage** |
|---|---|---|---|---|---|---|
| 300 kg | 0,55 | 2,5 kg (=0,8 Gew.-%) | 9 | ~16 N/mm² | ~24 N/mm² | ~32 N/mm |
| 320 kg | 0,55 | 2,7 kg (=Gew.-0,8%) | 8 | ~18 N/mm² | ~27 N/mm² | ~40 N/mm² |

Das oben genannte Betonszusatzmittel zeigt die beste Wirkung bei einem Beton mit geringem Zementgehalt (280 bis 300 kg/m³ Beton).

### Beispiel 2:

25 Gew.-Teile der Natriumgluconatlösung gemäß Beispiel 1,

30 Gew.-Teile der Gluconsäurelösung gemäß Beispiel 1,

25 Gew.-Teile des Polycarboxylether gemäß Beispiel 1,

10 Gew.-Teile des Polyacrylats gemäß Beispiel 1 und

10 Gew.-Teile Wasser wurden analog Beispiel 1 gemischt und in einer Menge von 0,8 Gew.-%, bezogen auf das Zementgewicht, zur Herstellung eines Betons mit höherem Zementgehalt (350 bis 400 kg/m³ Beton) einem analogen Zement gemäß Beispiel 1 zugesetzt.

Auch hier konnte im Wesentlichen das Ergebnis des Beispiels 1 bestätigt werden.

## Patentansprüche

1. Fertigbetonmischung enthaltend Zement mit einem überdurchschnittlichen hohen Anteil an Brownmillerit sowie Albit und Gismondin und ein Betonzusatzmittel zur Erzeugung einer lang anhaltenden Fliessfähigkeit von Betonmischungen enthaltend
(a) **wenigstens** Gluconsäure und/oder ein in Wasser lösliches oder dispergierbares Alkalimetall- und/oder Erdalkalimetallsalz der Gluconsäure (Gluconat),
(b) **wenigstens** Polycarbonsäure, ausgewählt aus Polyacrylsäuren, Polymethacrylsäuren, Polymaleinsäure-Derivaten, Alginsäure oder Pektinsäure **und /oder ein in Wasser lösliches oder dispergierbares Alkalimetall- und/oder Erdalkalimetallsalz der Polycarbonsäure,**
(c) wenigstens ein wasserlösliches oder dispergierbares Alkalimetall-und/oder Erdalkalimetallsalz eines Polycarboxylatethers und
(d) Wasser.

2. Fertigbetonmischung nach Anspruch 1, **dadurch gekennzeichnet, dass** das Betonzusatzmittel ein Gemisch aus Gluconsäure und Alkalimetallgluconat enthält.

3. Fertigbetonmischung nach Anspruch 1, **dadurch gekennzeichnet, dass** Gewichtsverhältnis von Alkalimetallgluconat zu Gluconsäure im Bereich von 2 zu 1 bis 1 zu 2 Gewichtsteilen eingestellt ist.

4. Fertigbetonmischung nach einem der Ansprüche 1 bis 3, **dadurch gekennzeichnet, dass** das Betonzusatzmittel weiterhin wenigstens ein Alkalimetall- und/oder Erdalkalimetallsalz der Ligninsulfonsäure einschließlich der freien Säure enthält.

5. Fertigbetonmischung nach einem der Ansprüche 1 bis 4, **dadurch gekennzeichnet, dass** das Betonzusatzmittel
**(a)** 17,5 bis 35, insbesondere 20 bis 30 Gew.-% **Gluconsäure/** Gluconat,
**(b)** 5 bis 30, insbesondere 5 bis 10 Gew.-% Polycarbonsäure/**Polycarbonsäuresalz,**
**(c)** 5 bis 30, insbesondere 5 bis 20 Gew.-% Polycarboxylatether, **Polycarboxylatethersalz, gegebenenfalls** 0 bis 30, insbesondere 10 bis 20 Gew.-% Ligninsulfonsäure/Ligninsulfonsäuresalz und Wasser zu 100 Gew.-% ergänzt, enthält.

6. Fertigbetonmischung nach einem der Ansprüche 1 bis 5, **dadurch gekennzeichnet, dass** das Betonzusatzmittel einen pH-Wert im Bereich von 3,5 bis 6,5 aufweist.

7. Fertigbetonmischung nach Anspruch 1, enthaltend das Betonzusatzmittel in einer Menge von 0,2 bis 1,2, insbesondere 0,6 bis 0,8 Gew.-%, bezogen auf das Zementgewicht.

## Claims

1. A ready-mix concrete composition containing cement with a higher-than-average proportion of brownmillerite as well as albite and gismondine, and a concrete additive for producing a sustained flowability of concrete compositions containing:
(a) at least gluconic acid and/or a water-soluble or water-dispersible alkali metal and/or alkaline earth metal salt of gluconic acid (gluconate);
(b) at least a polycarboxylic acid selected from polyacrylic acids, polymethacrylic acids, polymaleic acid derivatives, alginic acid or pectinic acid and/or a water-soluble or water-dispersible alkali metal and/or alkaline earth metal salt of said polycarboxylic acid;
(c) at least one water-soluble or water-dispersible alkali metal and/or alkaline earth metal salt of a polycarboxylate ether; and
(d) water.

2. The ready-mix concrete composition according to claim 1, **characterized in that** said concrete additive contains a mixture of gluconic acid and alkali metal gluconate.

3. The ready-mix concrete composition according to claim 1, **characterized in that** the weight ratio of alkali metal gluconate to gluconic acid has been adjusted within a range of from 2 : 1 to 1 : 2 parts by weight.

4. The ready-mix concrete composition according to any of claims 1 to 3, **characterized in that** said concrete additive further contains at least one alkali metal and/or alkaline earth metal salt of lignosulfonic acid including the free acid thereof.

5. The ready-mix concrete composition according to any of claims 1 to 4, **characterized in that** said concrete additive contains:
(a) from 17.5 to 35%, especially from 20 to 30%, by weight of gluconic acid/gluconate;
(b) from 5 to 30%, especially from 5 to 10%, by weight of polycarboxylic acid/polycarboxylic acid salt;
(c) from 5 to 30%, especially from 5 to 20%, by weight of polycarboxylate ether, polycarboxylate ether salt;
optionally from 0 to 30%, especially from 10 to 20%, by weight of lignosulfonic acid/lignosulfonic acid salt; and
water to make up 100% by weight.

6. The ready-mix concrete composition according to any of claims 1 to 5, **characterized in that** said concrete additive has a pH within a range of from 3.5 to 6.5.

7. The ready-mix concrete composition according to claim 1, containing said concrete additive in an amount of from 0.2 to 1.2%, especially from 0.6 to 0.8%, by weight, based on the cement weight.

## Revendications

1. Formulation de béton prêt à l'emploi, contenant du ciment avec un taux supérieur à la moyenne de brownmillerite aussi bien qu'albite et de gismondine, et un adjuvant pour béton pour donner une fluidité prolongée aux formulations de béton, contenant:
(a) au moins de l'acide gluconique et/ou un sel de métal alcalin et/ou alcalino-terreux de l'acide gluconique soluble ou dispersible dans l'eau (gluconate);
(b) au moins un acide polycarboxylique choisi parmi les acides polyacryliques, les acides polyméthacryliques, les dérivés de l'acide polymaléique, l'acide alginique ou l'acide pectique et/ou un sel de métal alcalin et/ou alcalino-terreux de l'acide polycarboxylique soluble ou dispersible dans l'eau;
(c) au moins un sel de métal alcalin et/ou alcalino-terreux d'un éther de polycarboxylate soluble ou dispersible dans l'eau; et
(d) de l'eau.

2. Formulation de béton prêt à l'emploi selon la revendication 1, **caractérisée en ce que** ledit adjuvant pour béton contient un mélange d'acide gluconique et de gluconate de métal alcalin.

3. Formulation de béton prêt à l'emploi selon la revendication 1, **caractérisée en ce que** le rapport pondéral du gluconate de métal alcalin à l'acide gluconique est ajusté dans une gamme de 2 : 1 à 1 : 2 parties en poids.

4. Formulation de béton prêt à l'emploi selon l'une quelconque des revendications 1 à 3, **caractérisée en ce que** ledit adjuvant pour béton contient en outre au moins un sel de métal alcalin et/ou alcalino-terreux de l'acide lignosulfonique incluant l'acide libre.

5. Formulation de béton prêt à l'emploi selon l'une quelconque des revendications 1 à 4, **caractérisée en ce que** ledit adjuvant pour béton contient:
(a) de 17,5 à 35, notamment de 20 à 30, pour cent en poids de l'acide gluconique/du gluconate;
(b) de 5 à 30, notamment de 5 à 10, pour cent en poids de l'acide polycarboxylique/du sel d'acide polycarboxylique;
(c) de 5 à 30, notamment de 5 à 20, pour cent en poids de l'éther de polycarboxylate/du sel d'éther de polycarboxylate; éventuellement de 0 à 30, notamment de 10 à 20, pour cent en poids de l'acide lignosulfonique/du sel d'acide lignosulfonique; et le complément à 100 pour cent en poids d'eau.

6. Formulation de béton prêt à l'emploi selon l'une quelconque des revendications 1 à 5, **caractérisée en ce que** ledit adjuvant pour béton a une valeur pH comprise entre 3,5 et 6,5.

7. Formulation de béton prêt à l'emploi selon la revendication 1, contenant ledit adjuvant pour béton dans une quantité de 0,2 à 1,2, notamment de 0,6 à 0,8, pour cent en poids, sur la base du poids du ciment.
